# EUROPEAN PATENT APPLICATION

(11) **EP 1 609 826 A2**
(43) Date of publication of application: **28.12.2005**
(21) Application number: 05013368.5
(22) Date of filing: 21.06.2005
(51) Int. Cl.: C09D 5/16, C09D 175/04

(54) **Antibacterial paint containing nano silver particles and coating method using the same**

(30) Priority: 21.06.2004 KR 2004046001
(71) Applicant: SAMSUNG ELECTRONICS CO., LTD., Suwon-si, Gyeonggi-do (KR)
(72) Inventor: Kwon, Hyuk-Min SAMSUNG ELECTRONICS CO. LTD., Suwon-si Gyeonggi-do (KR); Yun, Ho-Wook SAMSUNG ELECTRONICS CO. LTD., Suwon-si Gyeonggi-do (KR); Kang, Shin-Chul SAMSUNG ELECTRONICS CO. LTD., Suwon-si Gyeonggi-do (KR); Kim, II-Jin SAMSUNG ELECTRONICS CO. LTD., Suwon-si Gyeonggi-do (KR); Go, Sung-Soo SAMSUNG ELECTRONICS CO. LTD., Suwon-si Gyeonggi-do (KR)
(74) Representative: Grünecker, Kinkeldey, Stockmair & Schwanhäusser Anwaltssozietät

(57) **Abstract**

An antibacterial paint containing 30 ppm of nano silver particles on a surface of an injection preform, a method for manufacturing the same, and a coating method using the same are provided. A nano silver-ethanol dispersion solution is injected into a butanol solution, while agitating it at a high speed to uniformly disperse a nano silver solution into the paint, to prepare a master batch containing nano silver particles. The master batch is injected into an Ultra Violet (UV) clear paint and is continuously agitated at a high speed for a predetermined period of time to obtain an antibacterial UV clear paint, which is used to coat the surface of an injection preform.

## Description

### BACKGROUND OF THE INVENTION

### 1. Field of the Invention

The present invention relates to antibacterial paint containing nano silver particles and a coating method using the same, and more particularly to an antibacterial paint composition containing 30 ppm nano silver particles on the surface of an injection preform and a coating method using the same.

### 2. Description of the Related Art

According to recent improvement in economic status and resulting interest in well-being, various products which contact the human body during use tend to need antibacterial properties.

In particular, telephones and portable terminals are carried on the users' hands and bacteria, which have reached the surface of the terminals through hands, may infect the users' body via the mouth.

To prevent bacteria from breeding, various antibacterial agents have been developed including products using jade and ceramic as the antibacterial material. However, antibacterial products composed of jade or ceramic cannot completely sanitize various types of bacteria including streptococcus pneumoniae, salmonella, O-157 bacteria, staphylococcus, and Escherichia coli.

Instead of jade or ceramic, silver is frequently used as the antibacterial material, which exhibits strong antibacterial properties, based on current nano technology.

Nano technology, as used herein, refers to a technology wherein a material, such as silver, is fabricated into nano-scale particles, which are processed into a mass of porous powder for maximized material performance. This is based on new phenomena which appear when crystal grain size of a material, such as metal or ceramic, become smaller than 100 nm and which is difficult to explain by conventional theories. It is known in the art that nano silver particles have antibacterial properties. Therefore, the nano silver particle materials are used in various fields including paint, optical catalysts, magnets, electronic device sensors, catalysts, and bioengineering materials.

In particular, methods have been developed to coat various products, which contact human bodies during use, with paint containing nano silver particles which have antibacterial properties as mentioned above.

However, silver particles have a very small size and are easily affected by ambient temperature. Therefore, a paint containing nano silver particles becomes easily discolored. Since the nano silver particles contained in the paint are exposed to Ultra Violet (UV) rays, silver instantly oxidizes to silver oxide and the paint becomes yellow.

After the yellowing phenomena, furthermore, the paint has difficulty in chemically bonding with other objects, because its surface is not active.

In addition, the nano silver particles contained in the paint frequently fail to maintain the antibacterial properties.

### SUMMARY OF THE INVENTION

Accordingly, the present invention has been made to solve the above described problems, and an object of the present invention is to provide an antibacterial paint composition containing nano silver particles having excellent antibacterial properties while minimizing a yellowing phenomenon.

Another object of the present invention is to provide a method for manufacturing an antibacterial paint composition containing nano silver particles having constant antibacterial properties while minimizing a yellowing phenomenon.

Yet another object of the present invention is to provide a method for coating the surface of an injection preform of a portable terminals, such as a portable telephone, with an antibacterial paint containing nano silver particles while using a minimum amount of nano silver particles and maintaining the antibacterial properties of the nano silver particles.

In order to accomplish these objects, the antibacterial paint includes nano silver particles, wherein the antibacterial paint is an Ultra Violet (UV)-curable paint for top-coating of an injection preform of a portable terminal and contains 25 to 35 ppm of nano silver particles having a diameter of 3 to 7 nm.

In a preferred embodiment the antibacterial paint contains 30 ppm of nano silver particles. In a further preferred embodiment the antibacterial paint contains nano silver particles having a diameter of about 5 nm.

In accordance with another aspect of the present invention, a method for manufacturing antibacterial paint containing nano silver particles includes the steps of dispersing nano silver into ethanol with a predetermined concentration to obtain a nano silver-ethanol dispersion solution, which is gradually injected into an isobutanol solution and is agitated continuously for a predetermined period of time to prepare a master batch containing a predetermined concentration of nano silver particles, injecting the master batch into UV clear paint and agitating with high speed for a predetermined period of time to obtain antibacterial UV clear paint containing a predetermined concentration of nano silver particles.

In accordance with yet another aspect of the present invention, a coating method using antibacterial paint containing nano silver particles includes the steps of coating the surface of an injection preform with a primer covered with color paint, performing primary drying on a surface of the primer with IR rays, coating an upper portion of the primer with a topcoat using UV clear paint prepared by injecting a master batch, and performing secondary drying on the surface of the topcoat with UV rays.

In a preferred embodiment the topcoat is made of an antibacterial UV clear paint made by using a master batch containing nano silver particles.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view illustrating the case of a portable communication apparatus coated with antibacterial paint containing nano silver particles according to an embodiment of the present invention;
FIG. 2 is a schematic view illustrating a method for manufacturing antibacterial paint containing nano silver particles according to an embodiment of the present invention;
FIG. 3 is a cross-sectional view illustrating a coating method using antibacterial paint containing nano silver particles according to an embodiment of the present invention;
FIG. 4 is a partially enlarged cross-sectional view of portion A of FIG. 3; and
FIG. 5 is a flow chart illustrating a coating method using antibacterial paint containing nano silver particles according to an embodiment of the present invention.

### DETAILED DESCRIPTION OF THE PREFERRED EMBODIMENT

Hereinafter, a preferred embodiment of the present invention will be described with reference to the accompanying drawings. In the following description of the present invention, a detailed description of known functions and configurations incorporated herein is omitted to avoid making the subject matter of the present invention for clarity where they are well-known in the art.

An antibacterial paint composition according to a first preferred embodiment of the present invention will now be described in detail.

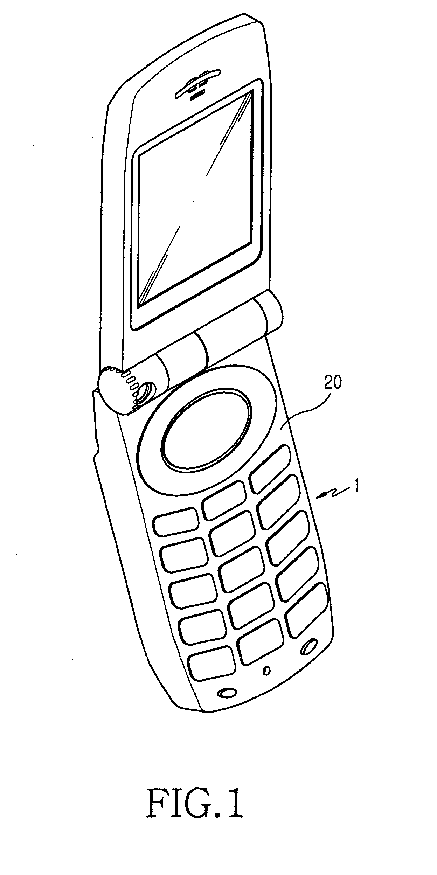

Referring to FIG. 1, the antibacterial paint according to the present invention is applied to an injection preform 1 of an electronic product, in particular, a case 20 of a portable terminal.

As the paint for coating the case of a portable terminal, Ultra Violet (UV)-curable paint (hereinafter, referred to as "UV paint") and thermosetting paint are generally used. The UV paint and thermosetting paint are vacuum evaporation paints for painting plastic materials such as a portable terminal or a cosmetic case. The materials of the UV paint and thermosetting paint are made of a poylurethane acrylate. The UV paint is cured in a relatively short period of time, for example 5-10 seconds, by chemical reaction of UV rays made by a UV radiation apparatus. The antibacterial paint according to the present invention is preferably UV paint.

Nano silver used as the UV paint composition according to the present invention is classified into a powder type and a liquid type. Liquid-type nano silver is classified into aqueous, ethanol-based, and methanol-based nano silver depending on the type of dispersion medium.

To minimize the yellowing phenomena of the paint containing nano silver, the nano silver for the UV paint composition according to the present invention is preferably ethanol-based liquid-type nano silver.

More specifically, the nano silver used in the UV paint composition preferably has a particle diameter of 5 nm. A predetermined amount (30 ppm) of nano silver particles are preferably contained in the UV paint composition as a silver colloid solution using a predetermined dispersion medium, such as ethanol, and a predetermined additive is preferably contained together.

The appropriate diameter of nano silver particles is 5 nm. In general, nano silver particles having a diameter of 70 nm (hereinafter, referred to as "70 nm nano silver particles") are used in the powder-type nano silver ,while nano silver particles having a diameter of 5 nm (hereinafter, referred to as "5 nm nano silver particles") are used in the liquid-type nano silver. Referring to test result, when 5 nm nano silver particles are used, the antibacterial properties can be maintained with a less amount of silver than when 70 nm nano silver particles are used, because of the increased surface area of nano silver particles per unit area, while minimizing the yellowing phenomena as described.

5 nm nano silver particles are dispersed into a dispersion medium at concentration of 1,000 ppm (hereinafter, refer to as "1,000 ppm nano silver master batch) to prepare a silver colloid solution (hereinafter, referred to as a nano silver master batch). Preferably, the 1,000 ppm nano silver master batch is added to the paint at a ratio of 3%. The dispersion medium is preferably ethanol, which will be described later in more detail with reference to a second embodiment of the present invention.

When 5 nm liquid-type nano silver is used, the degree of yellowing phenomena depends on the amount of nano particles added to the paint and, in order to avoid the yellowing phenomena, the amount of nano particles must be controlled precisely. 5 nm nano silver particles are preferably used since they have a small size, they can be stored conveniently, and uniform distribution is possible during coating. Since the 1,000 ppm master batch containing nano silver particles is prepared, it is easy to disperse nano silver particles. When the master batch is added to the paint (UV clear paint) at a ratio of 3%, the yellowing phenomena can be avoided.

Referring to test results, the amount of nano silver particles is 30 ppm of the amount of paint (1,000 ppm × 0.03 = 30 ppm). Thus, it is possible to maintain the antibacterial properties and minimize the yellowing phenomena with paint containing only 30 ppm of nano silver particles.

When a non-yellowed polyurethane-based polymer is used as the photo-polymerized polymer contained in the paint as an additive, the yellowing phenomena of the coating film is minimized even under strong UV rays.

A method for manufacturing antibacterial paint according to a second preferred embodiment of the present invention will now be described in detail.

A method for manufacturing an antibacterial paint containing nano silver particles according to the present invention includes the step of preparing a nano silver master batch and making the antibacterial UV clear paint.

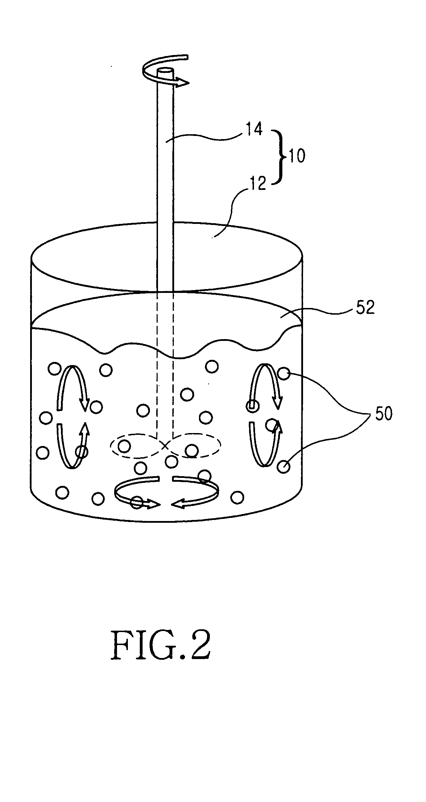

Referring to FIG. 2, the step of preparing a master batch includes the steps of
making a nano silver-ethanol dispersion solution by dispersing nano silver particles into ethanol at a ratio of 20,000 ppm and
filling an agitation container 12 of an agitator 10 with isobutanol solution 52, gradually injecting the nano silver-ethanol dispersion solution therein while rotating a turbine shaft 14 at 600-800 rpm, and continuously agitating it for 25-30 minutes to obtain a silver-colloid solution (hereinafter, referred to as "first agitation step").

The first agitation step is to disperse uniformly nano silver into the dispersion medium and the final concentration of nano silver per the dispersion medium, such as ethanol and isobutanol, is adjusted to be 1,000 ppm. Specifically, nano silver particles are dispersed into ethanol at a ratio of 20,000 ppm and are diluted with isobutanol solution at a ratio of 1,000 ppm.

In the step of making antibacterial UV clear paint, the agitation container 12 of the agitator 10 is filled with UV clear paint (not shown) and the master batch is injected therein at a ratio of 3%, while rotating the turbine shaft 14 at a high speed of 800-1,000 rpm, and is continuously agitated for 25-30 minutes (hereinafter, referred to as "second agitation step").

The second agitation step is to disperse uniformly the master batch into the UV clear paint and the concentration of nano silver particles per the UV clear paint is 30 ppm (1,000 ppm × 0.03).

Nano silver particles are uniformly dispersed into the UV clear paint in the first and second agitation steps and the antibacterial properties of nano silver make it possible to manufacture antibacterial UV clear paint according to the present invention.

A method for coating the surface of an injection preform of a portable terminal, such as a portable telephone, with the antibacterial paint containing nano silver particles according to a third preferred embodiment of the present invention will now be described in detail.

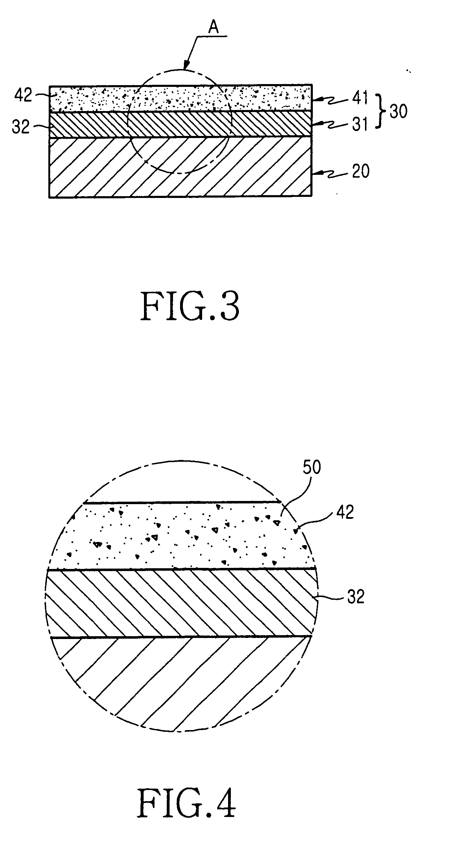

Referring to FIGs. 3 and 4, a surface of an injection preform 20 of a portable terminal, such as a portable telephone, is coated with a primer 31 and a topcoat 41. Particularly, the topcoat 41 is made of the antibacterial UV clear paint prepared according to the second embodiment of the present invention.

The primer 31 is contained within a color paint 32 as in conventional paint coating. The topcoat 41 is made of a transparent material and contains nano silver particles 50 to provide the portable terminal with antibacterial properties. Since only the topcoat 41 contains nano silver particles, the antibacterial properties can be obtained by the present invention, while using a small amount of nano silver.

The procedure of the coating method using an antibacterial paint containing nano silver particles according to the third preferred embodiment of the present invention will now be described in more detail.

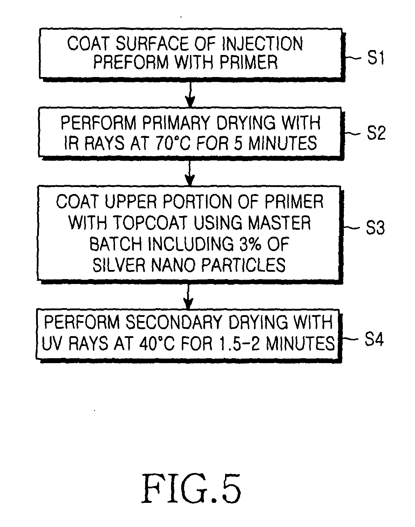

Referring to FIG. 5, a case 20 of a portable terminal is given as an example of the injection preform 1.

The case 20 is coated with an antibacterial paint 30. The antibacterial paint 30 consists of a primer 31 and a topcoat 41. The topcoat 41 is made of an antibacterial UV clear paint, which is made using a master batch 42 containing nano silver particles 50. The primer 31 is covered with color paint 32.

The surface of the case 20 is coated with the primer 31, which has been covered with color paint 32 in step S 1.

The surface of the primer 31 is subjected to primary drying with IR rays for 5 minutes in an IR dryer (not shown) at a temperature of 70°C in step S2.

The upper portion of the primer 31 is coated with the topcoat 41 using the antibacterial UV clear paint in step S3. The antibacterial UV clear paint and the method for manufacturing the same have already been described.

The surface of the topcoat 41 is subjected to secondary drying with UV rays for 1.5-2 minutes in a UV dryer (not shown) at a temperature of 40°C in step S4.

The above described steps provide a method for coating a portable terminal, such as a portable telephone, with the antibacterial paint containing less amount of nano silver while maintaining the antibacterial properties and preventing the nano sliver from yellowing.

The advantages of the nano silver particles according to the present invention will now be described in comparison with conventional 70 nano silver particles and 5 nano silver particles of the preferred embodiment of the present invention.

Referring to following Table 1, the comparison is described between the inventive nano silver particles and conventional 70 and 5 nano silver particles.

**Table 1**

| Classification | 70 nano (powder) | 5 nano (liquid) |
|---|---|---|
| Number of particles per 1g | 254,000,000 | 700,000,000,000 |
| In the case of 100 ppm | 25,400 | |
| In the case of 30 ppm | | 21,000,000 |
| Per one portable telephone (10g) | 254,000 | 210,000,000 |
| (unit: million) | | |

It is clear from Table 1 that the antibacterial and disinfectant properties are improved by the increased number of 50 nano silver particles of 5 nano particles than conventional 70 nano particles.

Since the case of a portable terminal is coated with an antibacterial paint composition containing 30 ppm of nano silver particles, the antibacterial and disinfectant properties of the case are improved and the paint is prevented from discoloring and yellowing by correctly adjusting the amount of nano silver particles.

While the invention has been shown and described with reference to certain preferred embodiments thereof, it will be understood by those skilled in the art that various changes in form and details may be made therein without departing from the spirit and scope of the invention as defined by the appended claims.

## Claims

1. Antibacterial paint comprising nano silver particles, wherein the antibacterial paint is Ultra Violet (UV)-curable paint for top-coating of an injection preform of a portable terminal and contains 25 to 35 ppm of nano silver particles having a diameter of 3 to 7 nm.

2. The antibacterial paint as claimed in claim 1, further comprising a non-yellowed polyurethane-based nano polymer as a photo-polymerized polymer.

3. A method for manufacturing antibacterial paint containing nano silver particles comprising the steps of:
dispersing nano silver particles into ethanol with a predetermined concentration to obtain a nano silver-ethanol dispersion solution, which is gradually injected into an isobutanol solution and is agitated continuously for a predetermined period of time to prepare a master batch containing a predetermined concentration of nano silver particles; and
injecting the master batch into a UV clear paint and agitating with a high speed for a predetermined period of time to obtain antibacterial UV clear paint containing a predetermined concentration of nano silver particles.

4. The method as claimed in claim 3, wherein the concentration of nano silver in the nano silver-ethanol dispersion solution is from 15,000 to 25,000 ppm, preferably 20,000 ppm.

5. The method as claimed in claim 3, wherein the concentration of nano silver contained in the master batch is from 800 to 1,200 ppm, preferably about 1,000 ppm.

6. The method as claimed in claim 3, wherein the continuous agitation is performed at a speed of 600-800 rpm for 25-30 minutes.

7. The method as claimed in claim 3, wherein the concentration of nano silver contained in the antibacterial UV clear paint is adjusted to be 30 ppm by injecting 3% of 1,000 ppm master batch.

8. The method as claimed in claim 3, wherein the high-speed agitation is performed at a speed of 800-1,000 rpm for 25-30 minutes.

9. The method as claimed in claim 3, wherein the nano silver particles have a diameter of from 3 to 7 nm, preferably about 5 nm.

10. A coating method using an antibacterial paint containing nano silver particles comprising the steps of:
coating a surface of an injection preform with a primer covered with color paint;
performing a primary drying of the surface of the primer with infrared (IR) rays;
coating an upper portion of the primer with a topcoat using UV clear paint prepared by injecting a master batch; and
performing a secondary drying of the surface of the topcoat with UV rays.

11. The method as claimed in claim 10, wherein an IR dryer is used during the primary drying.

12. The method as claimed in claim 10, wherein the primary drying is performed at a temperature of 70°C for 5 minutes.

13. The method as claimed in claim 10, wherein, in the step of coating the primer with the topcoat, the master batch contains nano silver particles and is injected into the UV clear paint at a ratio of 3%.

14. The method as claimed in claim 10, wherein a UV dryer is used during the secondary drying.

15. The method as claimed in claim 10, wherein the secondary drying is performed at a temperature of 40°C for 1.5-2 minutes.
